# EUROPÄISCHE PATENTSCHRIFT

(11) **EP 4 166 834 B1**
(45) Veröffentlichungstag und Bekanntmachung des Hinweises auf die Patenterteilung: **15.01.2025**
(21) Anmeldenummer: 22201011.8
(22) Anmeldetag: 12.10.2022
(51) Int. Cl.: F16L 33/207

(54) **MONTAGEGRUPPE FÜR EIN PRESSFITTING, PRESSFITTING UND MONTAGEVERFAHREN FÜR EIN PRESSFITTING**
ASSEMBLY GROUP FOR A PRESS FITTING, PRESS FITTING AND ASSEMBLY METHOD FOR A PRESS FITTING
GROUPE DE MONTAGE POUR RACCORD À SERTIR, RACCORD À SERTIR ET PROCÉDÉ DE MONTAGE POUR RACCORD À SERTIR

(30) Priorität: 13.10.2021 DE 102021126520
(43) Veröffentlichungstag der Anmeldung: 19.04.2023
(73) Patentinhaber: Uponor Innovation AB, 73061 Virsbo (SE)
(72) Erfinder: Sobota, Gregor, 96191 Viereth (DE); Dittmar, Rainer, 97422 Schweinfurt (DE)
(74) Vertreter: Fenner, Seraina

(56) Entgegenhaltungen:
- EP-A1- 1 933 073
- EP-A2- 1 306 601
- EP-B1- 3 645 926
- US-B2- 11 092 265

## Beschreibung

Die Erfindung betrifft eine Montagegruppe für ein Pressfitting, aufweisend eine Presshülse und einen Anschlagring. Die Erfindung betrifft des Weiteren ein Pressfitting mit einer derartigen Montagegruppe und ein Montageverfahren für ein derartiges Pressfitting.

Pressfittinge für Rohrverbindungen sind aus dem Stand der Technik bekannt. Beispielsweise ist aus der DE 10 2018 109 555 B3 ein Pressfitting 101 für eine Rohrverbindung bekannt, das in der Figur 12 dargestellt ist.

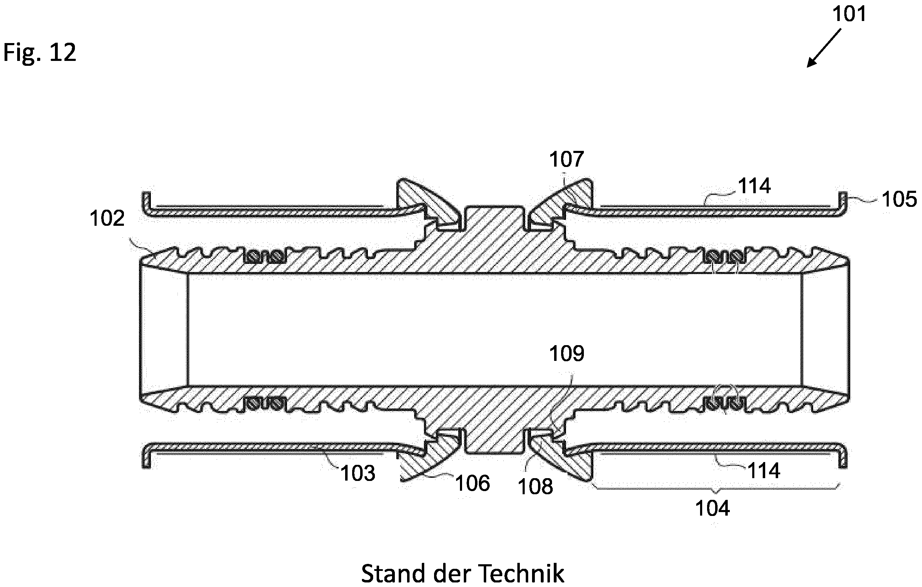

Das Pressfitting 101 gemäß Figur 12 weist einen Fittingkörper 102 zum Verbinden des Pressfittings 101 mit einem Rohr, zwei an dem Fittingkörper 102 festgelegte Presshülsen 103 mit jeweils einem im Wesentlichen zylinderförmigen Pressbereich 104 und wenigstens einem hervorstehenden Element in Form eines Flansch 105, das den im Wesentlichen zylinderförmigen Pressbereich 104 in axialer Richtung begrenzt, und eine schlauchförmige Banderole 114 aus einer Kunststofffolie auf. Wie in der Figur 12 zu erkennen ist, wird jede der Presshülsen 103 mittels eines Halterings 106 an dem Fittingkörper 102 festgelegt. Hierzu weist die Presshülse 103 am proximalen Ende einen geringfügig aufgeweiteten Bereich 107 auf, der mit dem Haltering 106 verrastet ist. Der Haltering 106 ist des Weiteren mit dem Fittingkörper 102 über zwei gegenüberliegende Rastnasen 108 und 109 verrastet.

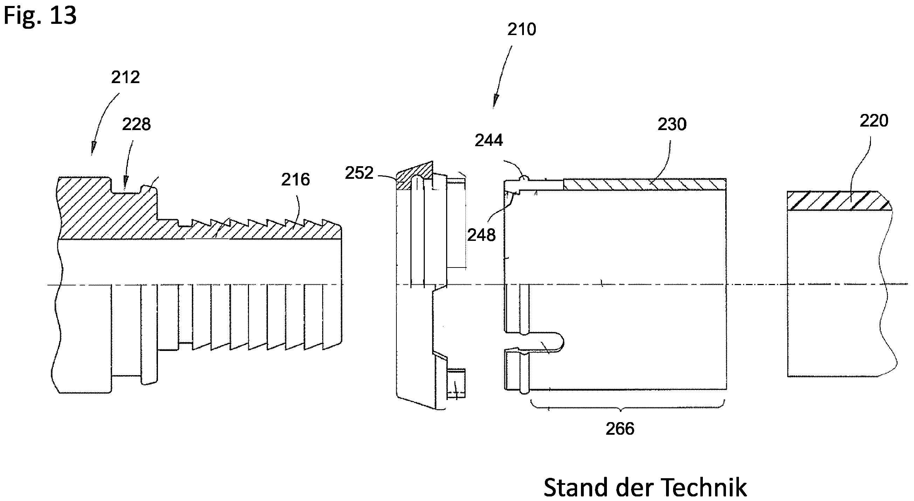

Des Weiteren ist aus der EP 1 790 896 A1 ein Pressfitting 210 für ein Rohr, insbesondere ein Kunststoffrohr oder ein Rohr aus einem Kunststoffmetallverbundwerkstoff, bekannt, das in der Figur 13 dargestellt ist.

Das Pressfitting 210 der Figur 13 ist mit einem Fittingkörper 212, der einen Stützkörper 216 aufweist, auf den ein anzuschließendes Rohr 220 aufschiebbar ist, einer Presshülse 230, die einen Verpressbereich 266 aufweist, in welchem bei Verpressung der Presshülse 230 auf diese ein Presswerkzeug einwirkt, und einem Verpressanzeigering 252, der an einer Außenwulst 244 der Presshülse 230 gehalten ist, versehen. Das Pressfitting 210 der Figur 13 unterscheidet sich unter anderem dadurch von dem Pressfitting 101 der Figur 12, dass ein Innenvorsprung 248 der Presshülse 230 direkt in eine außenliegende Umfangsvertiefung 228 des Fittingkörpers 212 eintaucht.

Aus der EP 1 933 073 A1 ist ein Pressfitting für ein Rohr, das mit einem Fittingkörper versehen ist, bekannt, der einen Stützkörper aufweist, auf den ein anzuschließendes Rohr aufschiebbar ist. Ferner weist das Pressfitting eine Presshülse auf, die ein Halteende aufweist, an welchem die Presshülse an dem Fittingkörper gehalten ist. Die Presshülse weist an ihrem Halteende zur Stirnseite der Presshülse hin offene Randaussparungen auf. Ein Kunststoffring liegt außen an der Presshülse und ist gegen Bewegungen in axialer Richtung der Presshülse an dieser gesichert, wobei der Kunststoffring mindestens einen axial abstehenden Vorsprung aufweist, der sich bis in den Verpressbereich der Presshülse hinein erstreckt und der bei Einwirkung des Presswerkzeuges auf die Presshülse zerstörbar und/oder von dem Kunststoffring abtrennbar gesichert ist.

Der vorliegenden Erfindung liegt die Aufgabe zugrunde, ein verbessertes, bevorzugt besonders einfach herzustellendes Pressfitting zu beschreiben. Insbesondere soll ein Pressfitting beschrieben werden, bei dem Beschädigungen an Einzelteilen, wie beispielsweise dem Fittingkörper, während der Herstellung reduziert beziehungsweise vermeiden werden können, und/oder das die Herstellung einer dauerhaften, gegenüber Stößen, beispielsweise aus einer lateralen Richtung, unempfindlichen Verbindung zwischen einer Presshülse und einem Anschlagring ermöglicht, auch während der Herstellung und vor dem Verpressen des Pressfittigs.

Die Erfindung ist in den angehängten Ansprüchen angegeben.

Gemäß einem ersten Aspekt der Offenbarung wird eine Montagegruppe für ein Pressfitting beschrieben. Die Montagegruppe weist eine im Wesentlichen zylinderförmigen Presshülse mit einem Pressbereich und einen an einem ersten axialen Ende der Presshülse festgelegten Anschlagring auf, der den Pressbereich in einer axialen Richtung der Presshülse begrenzt. Der Anschlagring weist eine erste Innenkontur an einer dem Pressbereich gegenüberliegenden Seite zum Aufbringen der Montagegruppe auf einen Fittingkörper des Pressfittings sowie ein erstes Kreissegment und ein dazu benachbartes zweites Kreissegment, das sich über einen kleineren Teil der ersten Innenkontur erstreckt als das erste Kreissegment, auf. Des Weiteren weist der Anschlagring einen im Bereich des ersten Kreissegments gleichbleibenden Querschnitt und ein im Bereich des zweiten Kreissegments angeordnetes Element auf, das nach Innen über den gleichbleibenden Querschnitt des ersten Kreissegments hinausragt, so dass es beim Aufbringen der Montagegruppe auf den Fittingkörper eine relative Verkippung einer Symmetrieachse der Presshülse gegenüber einer zentralen Achse des Fittingkörpers bewirkt.

Eine derartige Montagegruppe wird beim Aufbringen auf einen Fittingkörper eines Pressfittings automatisch verkippt, was das Aufbringen der Montagegruppe auf den Fittingkörper erleichtert. Zugleich werden dabei auftretende Kräfte reduziert, so dass eine Beschädigung von Teilen des Pressfittings, insbesondere des Fittingkörpers, während der Montage weitgehend vermieden wird.

Anspruchsgemäß weist die erste Innenkontur im Bereich des ersten Kreissegments eine Fase auf, deren lichter Innendurchmesser sich von der dem Pressbereich gegenüberliegenden Seite ausgehend in axialer Richtung der Montagegruppe verkleinert. Eine innen liegende Fase an dem Anschlagring vereinfacht ein Zentrieren und Aufbringen der Montagegruppe auf den Fittingkörper.

Anspruchsgemäß weist das im Bereich des zweiten Kreissegments angeordnete Element eine Einführschräge auf. Ein Neigungswinkel der Einführschräge ist größer als ein Neigungswinkel der Fase, jeweils bezogen auf die Symmetrieachse der Montagegruppe, und/oder eine Oberfläche der Einfüllschräge ist in radialer Richtung nach innen zu einer korrespondierenden Oberfläche der Fase versetzt angeordnet. Eine derartige Einführschräge unterstützt das Zentrieren und Aufbringen der Montagegruppe und bewirkt gleichzeitig ihre Verkippung.

Gemäß einer alternativen, nicht beanspruchten Ausgestaltung ist das im Bereich des zweiten Kreissegments angeordnete Element als eine in radialer Richtung aus dem gleichbleibenden Querschnitt des ersten Kreissegments hervorspringende Lasche ausgestaltet. Eine derartige Ausgestaltung ist besonders einfach herzustellen und bewirkt ein sicheres Verkippen der Montagegruppe.

Gemäß einem zweiten Aspekt der Offenbarung wird ein Pressfitting beschrieben, das einen Fittingkörper sowie eine an dem Fittingkörper festgelegte Montagegruppe gemäß dem ersten Aspekt aufweist. Ein derartiges Pressfitting kann besonders einfach und mit verhältnismäßig geringen Kräften zusammengebaut werden.

In wenigstens einer Ausgestaltung weist der Fittingkörper eine umlaufende Nut auf, und die Presshülse weist an dem ersten axialen Ende einen in radialer Richtung nach innen weisenden ersten Vorsprung auf, der in die Nut eingreift, so dass die Presshülse unmittelbar am Fittingkörper festgelegt ist. Eine derartige, direkte Befestigung einer Presshülse unmittelbar an einem Fittingkörper verhindert ein unbeabsichtigtes Lösen der Presshülse von dem Fittingkörper bei einer gleichzeitigen Begrenzung der zu ihrem Aufbringen nötigen Montagekraft durch das Verkippen.

Gemäß einem dritten Aspekt der Offenbarung wird ein Montageverfahren für das Pressfitting gemäß dem zweiten Aspekt beschrieben. Das Montageverfahren umfasst die folgenden Schritte:
- Befestigen des Anschlagrings an einem ersten axialen Ende der Presshülse,
- relatives Verkippen der Symmetrieachse der Presshülse gegenüber einer zentralen Achse des Fittingkörpers mittels des im Bereich des zweiten Kreissegments des Anschlagrings angeordneten Elements,

- in dem verkippten Zustand, Aufbringen der Presshülse mit dem daran befestigten Anschlagring mit dem ersten axialen Ende voran auf einen Fittingkörper, und
- Verrasten der Presshülse und/oder des Anschlagrings mit einer Nut des Fittingkörpers, wobei die Symmetrieachse der Presshülse nach dem Verrasten im Wesentlichen mit der zentralen Achse des Fittingkörpers übereinstimmt.

Durch die oben genannten Schritte kann eine zum Verrasten einer Presshülse und/oder eines Anschlagrings mit einem Fittingkörper benötigte Kraft reduziert werden, so dass insbesondere Beschädigungen im Bereich einer zum Verrasten verwendeten Nut des Fittingkörpers vermieden werden können.

Gemäß wenigstens einer Ausgestaltung stößt das im Bereich des zweiten Kreissegments angeordnetes Element im Schritt des Aufbringen der Presshülse an eine in Aufbringrichtung vor der Nut liegenden Erhebung, insbesondere in Form einer Rippe, des Fittingkörpers an und führt zu dem relativen Verkippen der Symmetrieachse der Presshülse gegenüber der zentralen Achse des Fittingkörpers. Dadurch kann die Montage des Pressfittings ohne weitere Anpassung der zu ihrer Montage verwendeten Maschinen und/oder Werkzeuge durchgeführt werden. Weitere vorteilhafte Ausgestaltungen sind in den angehängten Ansprüchen sowie der nachfolgenden, ausführlichen Beschreibung von Ausführungsbeispielen offenbart.

Die Erfindung wird nachfolgend anhand unterschiedlicher Ausführungsbeispiele unter Bezugnahme auf die angehängten Figuren im Detail erläutert. Dabei bezeichnen gleiche Bezugszeichen gleiche oder gleichartige Komponenten unterschiedlicher Ausführungsbeispiele.
- Figur 1: zeigt eine Explosionsdarstellung eines Pressfittings mit einem Anschlagring.
- Figuren 2 bis 4: zeigen unterschiedliche Darstellungen eines Anschlagrings gemäß Figur 1.
- Figur 5: zeigt das Pressfitting gemäß Figur 1 im montierten Zustand.
- Figur 6: zeigt einen Querschnitt durch das Pressfitting gemäß Figur 5.
- Figur 7: zeigt eine alternative Ausgestaltung eines Anschlagrings.
- Figuren 8 und 9: zeigen unterschiedliche Ansichten eines weiteren Anschlagrings.
- Figur 10: zeigt die Montage einer Montagegruppe an einem Fittingkörper.
- Figur 11: zeigt schematisch ein Verfahren zur Montage eines Pressfittings.
- Figur 12: zeigt ein erstes Pressfitting gemäß dem Stand der Technik.
- Figur 13: zeigt ein zweites Pressfitting gemäß dem Stand der Technik.

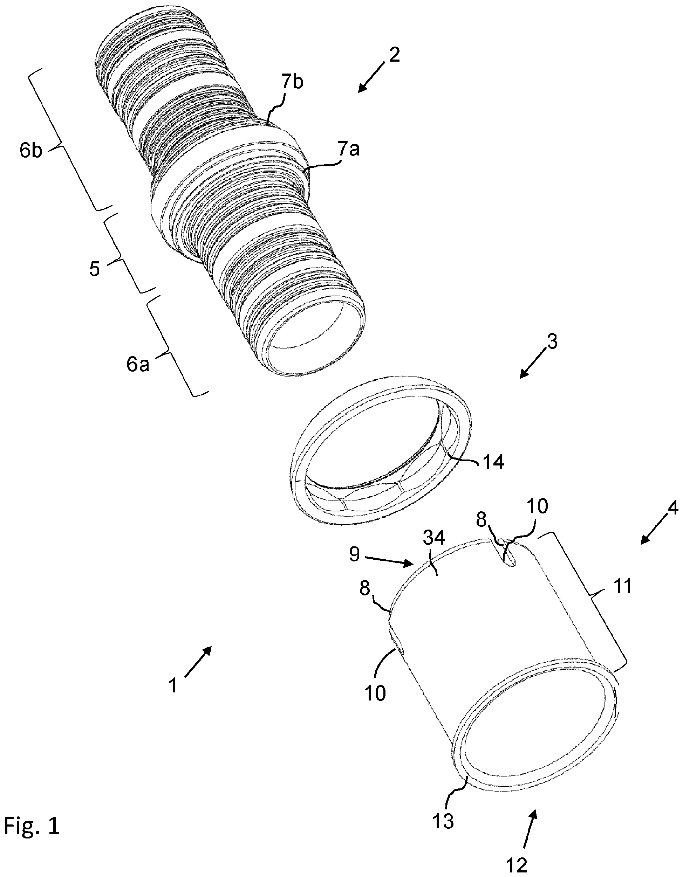

Figur 1 zeigt eine Explosionsdarstellung eines Pressfittings 1. Das Pressfitting 1 weist einen Fittingkörper 2, einen Anschlagring 3 und eine Presshülse 4 auf.

Im Ausführungsbeispiel handelt es sich bei dem Fittingkörper 2 um eine geradlinige, im Wesentlichen zylinderförmige Kupplung zum Verbinden zweier Rohre mit demselben Durchmesser. Selbstverständlich sind auch andere Fittingkörper, wie beispielsweise Winkelverbindungen, T-Stücke oder Kupplungen zum Verbinden von Rohren mit unterschiedlichen Durchmessern, möglich.

Der Fittingkörper 2 kann aus einem Kunststoffwerkzeug, wie beispielsweise einem Polymerwerkstoff oder aus einem Metallwerkstoff gefertigt sein. Die Oberfläche des Fittingkörpers 2 weist mehrere Erhebungen und Nuten auf, die eine sichere und dichte Verpressung eines in der Figur 1 nicht dargestellten Rohres, beispielsweise eines Kunststoff-, Metall- oder Verbundstoffrohre, mit dem Fittingkörper 2 sicherstellen. Hierzu können weitere, in der Figur 1 aus Gründen der Übersichtlichkeit nicht dargestellte Dichtelemente auf dem Fittingkörper 2 aufgebracht sein.

Der Fittingkörper 2 umfasst einen zentralen Bereich 5 sowie zwei einander gegenüberliegende Anschlussbereiche 6a und 6b. In dem zentralen Bereich 5 sind, jeweils benachbart zu dem jeweiligen Anschlussbereich 6a beziehungsweise 6b, Nuten 7a beziehungsweise 7b vorgesehen, die zum Verrasten mit nach innen aus der Presshülse 4 hervorstehenden ersten Vorsprüngen in Form von Lippen 8 dienen.

Die Presshülse 4 ist typischerweise aus einem Metallwerkstoff, insbesondere Edelstahl, gefertigt. Um eine erforderliche Kraft zum Verrasten der Presshülse 4 mit dem Fittingkörper 2 zu reduzieren, ist ein erstes axiales Ende 9 der Presshülse 4 mit mehreren Schlitzen 10 versehen. Die Schlitze 10 erleichtern ein Aufweiten des ersten axialen Endes 9 beim Aufschieben der Presshülse 4 auf den Fittingkörper 2. Dabei weist das erste axiale Ende 9 der Presshülse 4 in Richtung des zentralen Bereichs 7 des Fittingkörpers 2 und kann somit auch als proximales Ende bezeichnet werden. Bevor die Presshülse 4 auf den Fittingkörper 2 aufgebracht wird, wird an ihr zunächst der Anschlagring 3 montiert.

Der Anschlagring 3 ist typischerweise aus einem Kunststoffwerkzeug, insbesondere einem Polymerwerkstoff, gefertigt und begrenzt einen Pressbereich 11 der Presshülse 4 am ersten axialen Ende 9 der Presshülse 4. Am gegenüberliegenden, distalen beziehungsweise zweiten axialen Ende 12 der Presshülse 4 wird der Pressbereich 11 im dargestellten Ausführungsbeispiel durch einen zweiten Vorsprung in Form eines Flansches 13 der Presshülse 4 selbst begrenzt. Während eines Verpressens des Pressfittings 1 wirken Pressbacken eines in den Figuren nicht dargestellten Presswerkzeugs auf den Pressbereich 11 der Presshülse 4 ein und stellen so eine Formschlussverbindung zwischen dem Fittingkörper 3, einem in das Pressfitting eingebrachte Rohrende und der Presshülse 4 her.

Um den Anschlagring 3 bereits vor Montage der Presshülse 4 an dem Fittingkörper 2 sicher an der Presshülse 4 zu befestigen, weist der Anschlagring 3 eine hülsenseitige Innenkontur 14 auf, die zur Herstellung einer Klemmverbindung dient.

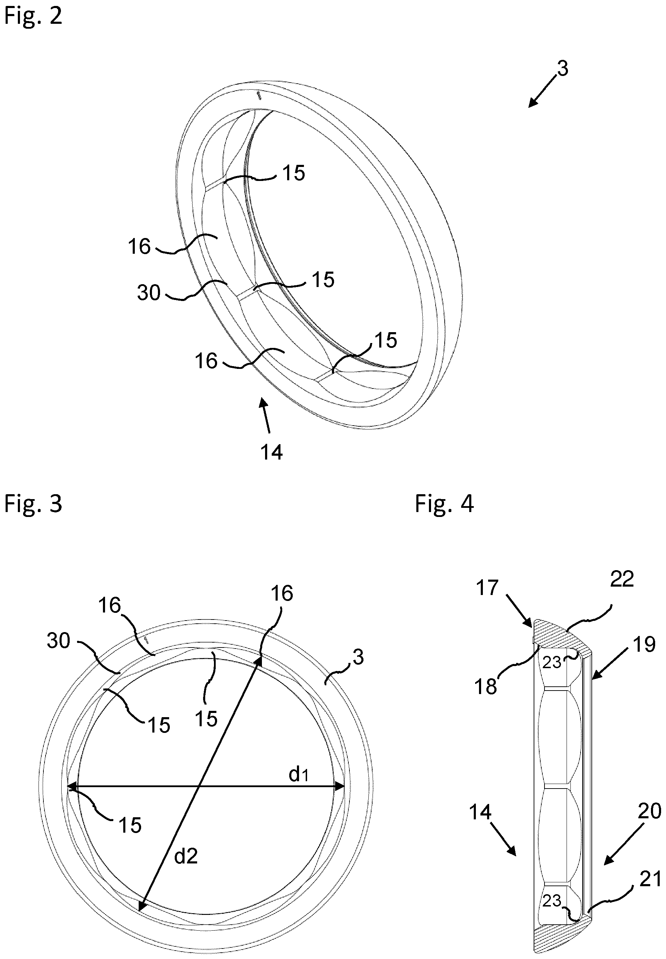

Wie in den Figuren 2 bis 4 zu erkennen ist, weist die Innenkontur 14 im dargestellten Ausführungsbeispiel insgesamt acht hervorstehende, erste Bereiche 15 auf. Dazwischen liegen acht demgegenüber zurücktretende, zweite Bereiche 16. Der Anschlagring 3 kann sich beim Aufschieben auf das erste axiale Ende 9 der Presshülse 4 leicht verformen. Dabei erzeugen insbesondere die ersten Bereiche 15 einen Klemmsitz.

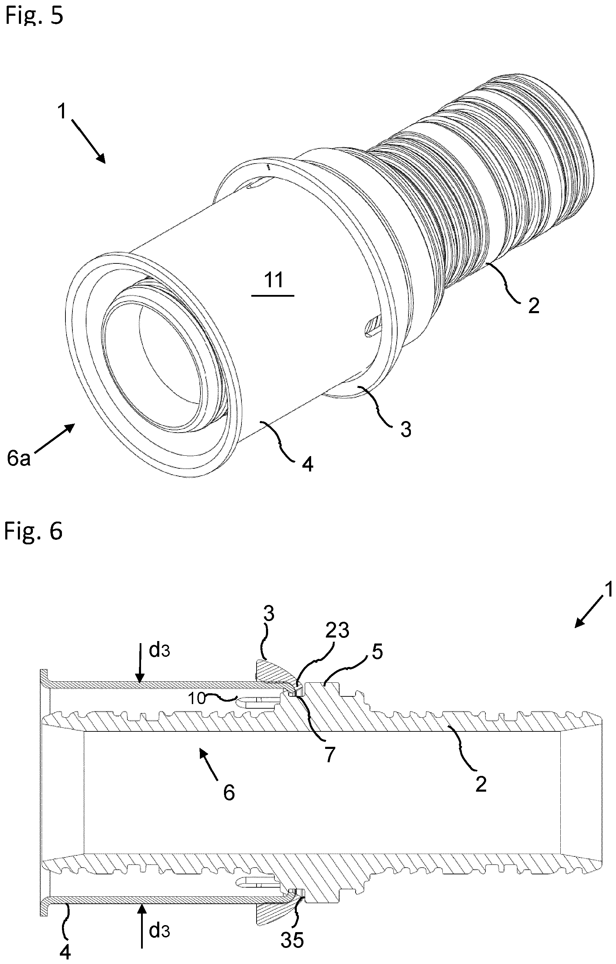

Hierzu ist ein erster Innendurchmesser d₁ eines verbleibenden lichten Bereichs zwischen den ersten Bereichen 15 so dimensioniert, dass er kleiner ist als ein in Figur 6 dargestellter Außendurchmesser d₃ der Presshülse 4 zuzüglich einer möglichen, negativen Herstellungstoleranz. Beispielsweise kann eine Presshülse für einen Rohrdurchmesser von 25 mm Durchmesser einen Toleranzbereich von zirka 0,25 mm, also etwa 1 % des Nenndurchmessers, aufweisen. In diesem Fall ist der erste Innendurchmesser d₁ zwischen Stirnseiten der ersten Bereiche 15 derart dimensioniert, dass selbst bei einem minimal zulässigen Außendurchmesser der Presshülse 4 eine Überlappung von 0,1 mm zum Bereitstellen einer Klemmkraft verbleibt. Umgekehrt besteht bei einem maximal zulässigen Außendurchmesser der Presshülse 4 eine Überlappung von 0,35 mm.

Dagegen ist ein zweiter Innendurchmesser d₂ zwischen zwei gegenüberliegenden, am weitesten zurücktretenden Teilen der zweiten Bereiche 16 so groß dimensioniert, dass in jedem Fall ein lichter Abstand zwischen einer Mantelfläche der Presshülse 4 und einem korrespondieren zweiten Bereich 16 der Innenkontur 14 des Anschlagrings 3 verbleibt. Beispielsweise verbleibt ein minimaler Freiraum von 0,1 mm für den Fall eines maximalen Außendurchmessers der Presshülse 4 innerhalb des Toleranzbereiches und ein maximaler Abstand von 0,35 mm im Fall eines minimalen Außendurchmessers der Presshülse 4. Im Ausführungsbeispiel gemäß den Figuren 1 bis 3 sind die ersten Bereiche 15 durch im Querschnitt bogenförmige Übergangsbereichen 30 mit den zweiten Bereichen 16 verbunden, in denen der Innendurchmesser des Anschlagrings 3 stetig zunimmt. Vorteil dieser Ausführung ist, dass die bogenförmigen Übergangsbereiche 30 mechanisch besonders stabil sind. Des Weiteren sind die hervorstehenden, ersten Bereiche 15 so breit ausgestaltet, dass sie bei der Montage des Anschlagrings 3 nicht vollständig in die Schlitze 10 der Presshülse 4 eintauchen.

Im Querschnitt gemäß Figur 4 ist zu erkennen, dass eine erste Seite 17 des Anschlagrings 3, die im montierten Zustand dem Pressbereich 11 zugewandt ist, eine erste Fase 18 aufweist. Die erste Fase 18 ermöglicht ein Zentrieren und leichtes Aufstecken des Anschlussrings 3 auf das erste axiale Ende 9 der Presshülse 3.

Des Weiteren ist zu erkennen, dass eine gegenüberliegende zweite Seite 19 des Anschlagrings 3, die im montierten Zustand dem zentralen Bereich 6 des Fittingkörpers 2 zugewandt ist, eine fittingseitige Innenkontur 20 mit einer zweiten Fase 21 aufweist. Die zweite Fase 21 dient unter anderem zum Zentrieren einer Montagegruppe, umfassend den Anschlagring 3 und die Presshülse 4, bei deren Montage auf dem Fittingkörper 2. Eine bogenförmige Außenkontur 22 des Anschlagrings 3 verbindet den äußeren Durchmesser der ersten Seite 17 kontinuierlich mit dem Außendurchmesser der zweiten Seite 19, sodass im Querschnitt keine Stufen vorhanden sind. Die hülsenseitige Innenkontur 14 und die fittingseitige Innenkontur 20 werden durch einen nach innen ragenden dritten Vorsprung voneinander getrennt, der zugleich eine offene Bodenfläche 23 der hülsenseitigen Innenkontur 14 bildet und eine maximale Einstecktiefe der Presshülse 4 begrenzt.

Im montierten Zustand gemäß den Figuren 5 und 6 kann der dritte Vorsprung beziehungsweise die offene Bodenfläche 23 des Anschlagrings 3, wie im Querschnitt der Figur 6 dargestellt, ganz oder teilweise in die Nut 7 des Fittingkörpers 2 eingreifen. Bei entsprechender Dimensionierung kann er auch auf einer Oberfläche des Fittingkörpers 2 außerhalb der Nut 7 anliegen. Im Ausführungsbeispiel begrenzt er die Aufstecktiefe der Baugruppe beim Aufbringen der Presshülse 4 auf den Anschlussbereich 6a, indem die zweite Seite 19 des Anschlagrings 3 an eine Stirnfläche 35 des zentralen Bereichs 5 anstößt.

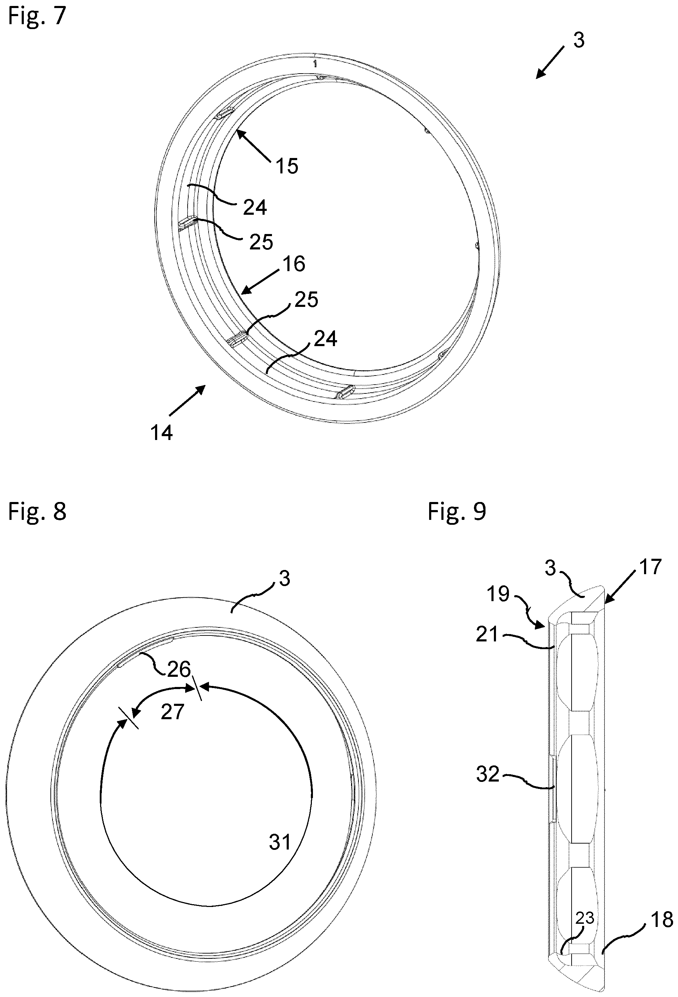

Figur 7 zeigt eine alternative Ausgestaltung einer hülsenseitigen Innenkontur 14 eines Anschlagrings 3. Abweichend von dem Anschlagring 3 gemäß den Figuren 1 bis 4 umfasst die Innenkontur 14 gemäß Figur 7 eine im Wesentlichen zylinderförmige Innenfläche 24 und darauf angeordnete Stege 25. Im Ausführungsbeispiel sind insgesamt acht solche Stege 25 vorhanden, die die ersten Bereiche 15 des Anschlagsrings 1 bilden. Die dazwischenliegenden Abschnitte der zylinderförmigen Innenfläche 24 bilden die zweiten Bereiche 16. Bezüglich deren Bemaßung wird auf das oben Gesagte verwiesen.

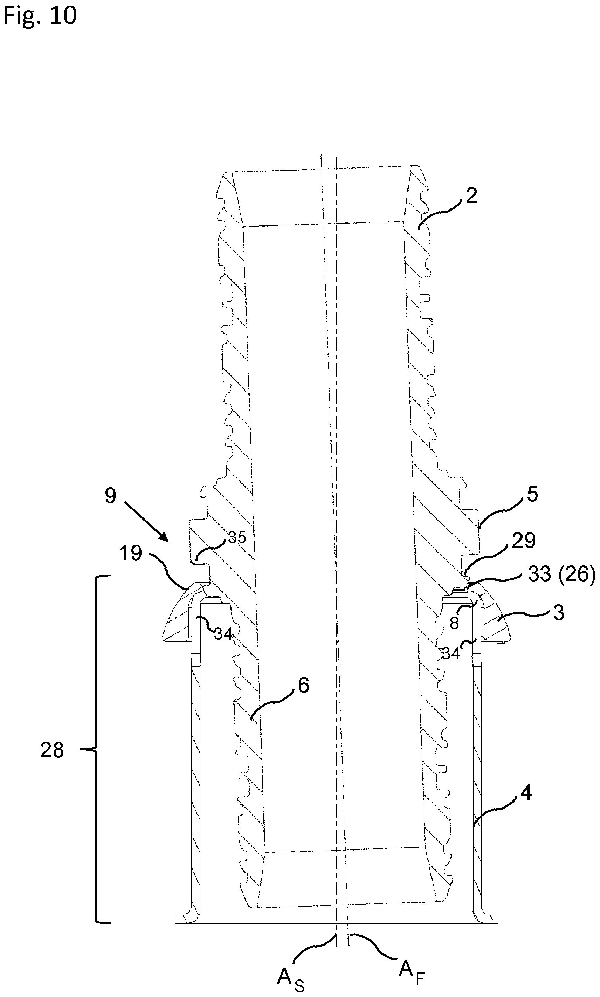

Im Folgenden wird anhand der Figuren 8 bis 10 ein weiterer Aspekt der fittingseitigen Innenkontur 20 gemäß einer weiteren Ausgestaltung eines Anschlussrings beschrieben. In diesem Ausführungsbeispiel weist die fittingseitige Innenkontur 20 ein hervorstehendes Element 26 auf, das in einem relativ kleinen Kreissegment 27 des Anschlagrings 3 angeordnet ist. In dem übrigen, verbleibenden Teil, entsprechend einem größeren Kreissegment 31, weist der Anschlagrings 3 einen gleichbleibenden Querschnitt auf. Hervorstehend bedeutet in diesem Zusammenhang, dass eine zum Zentrum des Anschlagrings 3 weisende Oberfläche des Elements 26 über eine umgebende Oberfläche der fittingseitigen Innenkontur 20 beziehungsweise des gleichbleibenden Querschnitts im Kreissegment 31 hinaus hervorsteht. Beispielsweise kann das Element 26, wie in der Figur 10 dargestellt, als eine aus dem Innenumfang des Anschlagrings 3 radial, also senkrecht zu seiner Symmetrieachse nach innen vorstehenden Lasche 33 ausgebildet sein. Demgegenüber ist es erfindungsgemäß, das Element 26 wie in den Figuren 8 und 9 dargestellt als Einführschräge 32 auszubilden, das auch einen Teil der zweiten Fase 21 bilden kann. In diesem Fall ist eine schräg nach innen geneigte Oberfläche der Einführschräge 32 im Bereich des kleineren Kreissegments 27, in dem das Element 26 ausgebildet ist, gegenüber einer Oberfläche der Fase 21 entweder parallel nach innen verschoben oder weist eine in Einführungsrichtung größere Neigung auf als die zweite Fase 21 der fittingseitigen Innenkontur 20.

Das Element 26 dient insbesondere dazu, beim Aufsetzen der Presshülse 4 mit dem darauf aufgesteckten Anschlussring 3 auf einen Anschlussbereich 6 des Fittingkörpers 2 zu einer relativen Verkippung deren Achsen zu führen.

Im in der Figur 10 dargestellten Ausführungsbeispiel steht eine Montagegruppe 28, aufweisend die Presshülse 4 und den Anschlussring 3, aufrecht und mit ihrem ersten axialen Ende 9 nach oben weisend auf einer ebenen Oberfläche, wie beispielsweise einer Haltevorrichtung einer Werkzeugmaschine. Sodann wird ein Fittingkörper 2 mit einem nach unten weisenden Anschlussbereich 6 im Wesentlichen senkrecht von oben in die Öffnung der Montagegruppe 28 eingeführt. Dabei stimmen die Achsenrichtungen der Montagegruppe 28 und des Fittingkörpers 2 zunächst überein.

Sobald die zweite Seite 19 des Anschlussrings 3 auf eine vor der Nut 7 befindliche, umlaufende Rippe 29 trifft, bewirkt das Element 26, in Figur 10 in Form einer Lasche 33, eine asymmetrische Kraftverteilung, die wie dargestellt zu einem leichten relativen Verkippen der zentralen Achse A_{F} des Anschlussbereichs 6 gegenüber der Symmetrieachse A_{S} der Montagegruppe 28 beziehungsweise der Presshülse 4 führt. Beispielsweise kann der Fittingkörper 2 um circa 2 bis 5° verkippt werden.

Dies hat zur Folge, dass die zwischen den Schlitzen 10 der Presshülse 4 gebildeten Segmente 34 der Presshülse 4 mit daran angeformten Lippen 8 sich beim Verrasten zeitlich leicht nacheinander aufweiten. Dies reduziert die erforderlichen Kräfte zum Verbinden der Montagegruppe 28 mit dem Fittingkörper 2 erheblich und erleichtert somit das Einführen des Anschlussbereichs 6 in die Montagegruppe 28.

Unter Versuchsbedingungen konnten die Montagekräfte bei einem Pressfitting 1 für einen nominalen Rohrdurchmesser von 25 mm durch ein versetztes beziehungsweise verkipptes Einführen des Anschlussbereichs 6 in die Montagegruppe 28 auf eine Einpresskraft von 242 N gegenüber einer Einpresskraft von zirka 2100 N bei einem koaxialen Einpressen reduziert werden, was die Montage des Pressfittings 1 erheblich erleichtert. Für einen nominalen Rohrdurchmesser von 32 mm reduzierte sich die Einpresskraft von 1500 N auf 314 N. Diese Reduktion der beim Montieren auftretenden Kräfte hat den zusätzlichen Vorteil, dass eine Beschädigung des Fittingkörpers 2 vermieden werden kann, insbesondere bei der Verwendung von Kunststoffmaterialien für den Fittingkörper 2.

Sobald der Montageprozess abgeschlossen ist, das heißt sobald die zweite Seite 19 des Anschlagrings 3 an eine durch den zentralen Bereich 5 gebildete Stirnfläche 35 anschlägt, richten sich die Presshülse 4 und der Fittingkörper 2 wieder koaxial aus. Somit wirkt sich das versetzte beziehungsweise verkippte Aufbringen der Montagegruppe 28 nicht nachteilig auf dessen Ausrichtung oder auf die sichere Befestigung der Presshülse 4 an dem Fittingkörper 2 aus.

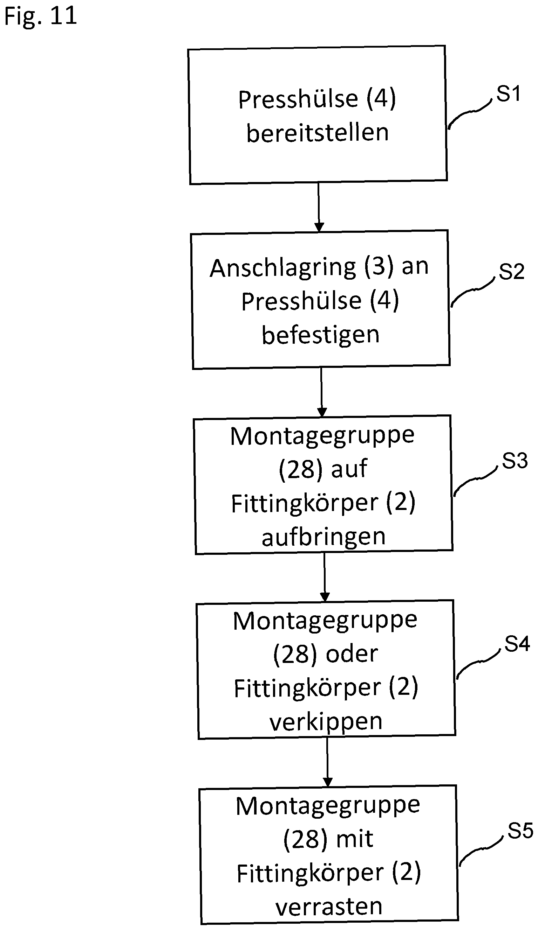

Figur 11 zeigt schematisch die Schritte eines Verfahrens zur Montage eines Pressfittings 1.

Zunächst wird ein einem Schritt S1 eine Presshülse 4 mit einem vorgegebenen nominellen Durchmesser bereitgestellt. Dieser Durchmesser kann innerhalb eines vorgegebenen Toleranzbereiches um einen bestimmten negativen und/oder positiven Toleranzwert variieren. Bevorzugt weist die Presshülse 4 ein oder mehrere Hervorhebungen, wie insbesondere Lippen 8, zum direkten Verrasten mit einem Fittingkörper 2 auf.

In einem nachfolgenden Schritt S2 wird an einem ersten axialen Ende 9 ein Anschlagring 3 auf die Presshülse 4 aufgesteckt. Bevorzugt wird dieser an der Presshülse 4 befestigt, beispielsweise durch das Vorsehen von erhabenen ersten Bereichen 15 und zurückliegenden, zweiten Bereichen 16, die zu einem Verklemmen des Anschlagrings 3 an der Presshülse 4 führen. Alternativ sind auch andere Verbindungen, insbesondere Formschlussverbindungen, möglich. In einem weiteren Schritt S3 wird die so hergestellte Montagegruppe 28 der Presshülse 4 mit dem daran befestigten Anschlagring 3 auf einen Anschlussbereich 6 eines Fittingkörpers 2 aufgebracht. Dies kann beispielsweise durch einen industriellen Bestückungsautomaten erfolgen.

In einem Schritt S4 werden die Längsachsen des Fittingkörpers 2 und der Montagegruppe 28 relativ zueinander verkippt. Dies kann beispielsweise durch eine entsprechende Ansteuerung eines Bestückungsautomaten oder eines Pressstempels oder erfindungsgemäß, wie zuvor anhand der Figuren 8 bis 10 beschrieben, durch Vorsehung einer entsprechenden fittingseitigen Innenkontur 20 mit einem hervorragenden Element 26 sichergestellt werden. Nachfolgend wird die Montagegruppe 28 in einem Schritt S5 weiter auf den Fittingkörper 2 aufgeschoben beziehungsweise gepresst, die Presshülse 4 mit dem Fittingkörper 2 verrastet, beispielsweise durch ein Eingreifen von Lippen 8 in eine entsprechende Nut 7 des Fittingkörpers 2.

In den beschriebenen Ausführungsbeispielen bleibt der Anschlagring 3 während dem eigentlichen Verpressen der Presshülse 4 mit einem Rohrende intakt, da das Presswerkzeug auf den Anschlagring 3 keine Kraft in einer radialen Pressrichtung ausübt. Sofern eine Anzeige der Verpressung gewünscht ist, kann das beschriebene Pressfitting 1 beispielsweise mit einer schlauchförmigen Banderole als Verpresskennzeichnung versehen werden. Das Aufbringen und die Vorteile einer derartigen Banderole 114, wie sie beispielsweise in der Figur 12 dargestellt ist, wurden bereits in der DE 2018 109 555 B3 ausführlich beschrieben. Zur Vermeidung von Wiederholung wird auf deren diesbezügliche Offenbarung verwiesen und diese durch Bezugnahme in die vorliegende Beschreibung aufgenommen.

Die zuvor beschriebene hülsenseitigen Innenkontur 14 auf der dem Pressbereich 11 zugewandten Seite des Anschlagrings 3 sowie die fittingseitige Innenkontur 20 auf der dem Fittingkörper 2 zugewandten Seite des Anschlagrings 3 können wie zuvor beschrieben miteinander kombiniert werden. Jedoch bewirkt jede der Innenkonturen 14 und 20 auch für sich genommen die beschriebenen Effekte und Vorteile auf und können daher auch einzeln verwirklicht werden.

### Bezugszeichenliste

- 1: Pressfitting
- 2: Fittingkörper
- 3: Anschlussring
- 4: Presshülse
- 5: zentraler Bereich
- 6, 6a, 6b: Anschlussbereich
- 7, 7a, 7b: Nut
- 8: Lippe (erster Vorsprung)
- 9: erstes axiales Ende
- 10: Schlitz
- 11: Pressbereich
- 12: zweites axiales Ende
- 13: Flansch (zweiter Vorsprung)
- 14: (hülsenseitige) Innenkontur
- 15: erster Bereich
- 16: zweiter Bereich
- 17: erste Seite
- 18: erste Fase
- 19: zweite Seite
- 20: (fittingseitige) Innenkontur
- 21: zweite Fase
- 22: Außenkontur
- 23: offene Bodenfläche (dritter Vorsprung)
- 24: Innenzylinderfläche
- 25: Steg
- 26: Element
- 27: (kleines) Kreissegment
- 28: Montagegruppe
- 29: Rippe
- 30: Übergangsbereich
- 31: (größeres) Kreissegment
- 32: Einführschräge
- 33: Lasche
- 34: Segment (der Presshülse)
- 35: Stirnfläche

## Patentansprüche

1. Montagegruppe (28) für ein Pressfitting (1), aufweisend:
- eine im Wesentlichen zylinderförmigen Presshülse (4) mit einem Pressbereich (11); und
- einen an einem ersten axialen Ende (9) der Presshülse (4) festgelegten Anschlagring (3), der den Pressbereich (11) in einer axialer Richtung der Presshülse (4) begrenzt, wobei der Anschlagring (3) folgendes aufweist:
- eine erste Innenkontur (20) an einer dem Pressbereich (11) gegenüberliegenden Seite (19) zum Aufbringen der Montagegruppe (28) auf einen Fittingkörper (2) des Pressfittings (1);
- ein erstes Kreissegment (31) und ein dazu benachbartes zweites Kreissegment (27), das sich über einen kleineren Teil der ersten Innenkontur (20) erstreckt als das erste Kreissegment (31);
- einen im Bereich des ersten Kreissegments (31) gleichbleibenden Querschnitt mit einer Fase (21), deren lichter Innendurchmesser sich von der dem Pressbereich (11) gegenüberliegenden Seite (19) ausgehend in axialer Richtung der Montagegruppe (28) verkleinert; und
- ein im Bereich des zweiten Kreissegments (27) angeordnetes Element (26), das nach Innen über den gleichbleibenden Querschnitt des ersten Kreissegments (31) hinausragt,
**dadurch gekennzeichnet, dass**
- das im Bereich des zweiten Kreissegments (27) angeordnete Element (26) eine Einführschräge (32) aufweist, und
- ein Neigungswinkel der Einführschräge (32) größer als ein Neigungswinkel der Fase (21) ist, jeweils bezogen auf die Symmetrieachse (A_{S}) der Montagegruppe (28), und/oder eine Oberfläche der Einführschräge (32) in radialer Richtung nach innen zu einer korrespondieren Oberfläche der Fase (21) versetzt angeordnet ist, so dass das Element (26) beim Aufbringen der Montagegruppe (28) auf den Fittingkörper (2) eine relative Verkippung einer Symmetrieachse (A_{S}) der Presshülse (4) gegenüber einer zentralen Achse (A_{F}) des Fittingkörpers (2) bewirkt.

2. Montagegruppe (28) nach Anspruch 1, wobei der Anschlagring (3) an einer dem Pressbereich (11) zugewandten Seite eine zweite Innenkontur (14) mit hervorstehenden, ersten Bereichen (15) und gegenüber den ersten Bereichen (15) zurücktretenden, zweiten Bereichen (16) zum Festlegen des Anschlagrings (3) an der Presshülse (4) aufweist.

3. Pressfitting (1), aufweisend einen Fittingkörper (2) sowie eine an dem Fittingkörper (2) festgelegte Montagegruppe (28) nach einem der Ansprüche 1 oder 2.

4. Pressfitting (1) nach Anspruch 3, wobei
- der Fittingkörper (2) eine umlaufende Nut (7) aufweist; und
- die Presshülse (4) an dem ersten axialen Ende (9) einen in radialer Richtung nach innen weisenden ersten Vorsprung aufweist, der in die Nut (7) eingreift, so dass die Presshülse (4) unmittelbar am Fittingkörper (2) festgelegt ist.

5. Pressfitting (1) nach Anspruch 4, wobei der in radialer Richtung nach innen weisende erste Vorsprung in Form einer Lippe (8) ausgestaltet ist.

6. Pressfitting (1) nach Anspruch 4 oder 5, wobei der Fittingkörper (2) eine in Aufbringrichtung vor der Nut (7) liegenden Erhebung aufweist, die derart ausgestaltet ist, dass das Element (26) beim Aufbringen der Montagegruppe (28) auf den Fittingkörper (2) an die Erhebung des Fittingkörpers (2) anstößt und so zu der relativen Verkippung der Symmetrieachse (A_{S}) der Presshülse (4) gegenüber der zentralen Achse (A_{F}) des Fittingkörpers (2) führt.

7. Pressfitting (1) nach Anspruch 6, wobei die in Aufbringrichtung vor der Nut (7) liegenden Erhebung in Form einer Rippe (29) ausgestaltet ist.

8. Pressfitting (1) nach einem der Ansprüche 4 bis 7, wobei der Anschlagring (3) einen in radialer Richtung nach innen weisenden zweiten Vorsprung aufweist, der in die Nut (7) des Fittingkörpers (2) eingreift.

9. Pressfitting (1) nach Anspruch 8, wobei der in radialer Richtung nach innen weisende zweiten Vorsprung in Form einer offenen Bodenfläche (23) ausgestaltet ist,

10. Montageverfahren (28) für ein Pressfitting (1), nach einem der Ansprüche 3 bis 9, mit den Schritten:
- Befestigen des Anschlagrings (3) an einem ersten axiales Ende (9) der Presshülse (4);
- relatives Verkippen der Symmetrieachse (A_{S}) der Presshülse (4) gegenüber einer zentralen Achse (A_{F}) des Fittingkörpers (2) mittels des im Bereich des zweiten Kreissegments (27) des Anschlagrings (3) angeordneten Elements (26);
- in dem verkippten Zustand, Aufbringen der Presshülse (4) mit dem daran befestigten Anschlagring (3) mit dem ersten axialen Ende (9) voran auf den Fittingkörper (2); und
- Verrasten der Presshülse (4) und/oder des Anschlagrings (3) mit einer Nut (7) des Fittingkörpers (2), wobei die Symmetrieachse (A_{S}) der Presshülse (4) nach dem Verrasten im Wesentlichen mit der zentralen Achse (A_{F}) des Fittingkörpers (2) übereinstimmt.

11. Montageverfahren (28) nach Anspruch 10, wobei das im Bereich des zweiten Kreissegments (27) angeordnetes Element (26) im Schritt des Aufbringen der Presshülse (4) an eine in Aufbringrichtung vor der Nut (7) liegenden Erhebung des Fittingkörpers (2) anstößt und zu dem relativen Verkippen der Symmetrieachse (A_{S}) der Presshülse (4) gegenüber der zentralen Achse (A_{F}) des Fittingkörpers (2) führt.

12. Montageverfahren (28) nach Anspruch 10 oder 11, weiter umfassend:
- Zentrieren der Montagegruppe, umfassend den Anschlagring (3) und die Presshülse (4), bei deren Montage auf dem Fittingkörper (2) durch die Fase (21) der ersten Innenkontur (20) des Anschlagrings (3).

## Claims

1. Assembly group (28) for a press fitting (1), having:
- a substantially cylindrical ferrule (4) with a pressing region (11); and
- a stop ring (3) which is secured to a first axial end (9) of the ferrule (4) and delimits the pressing region (11) in an axial direction of the ferrule (4), wherein the stop ring (3) has the following:
- a first internal contour (20) on a side (19) opposite the pressing region (11), for attaching the assembly group (28) to a fitting body (2) of the press fitting (1);
- a first circular segment (31) and a second circular segment (27), adjacent thereto, that extends over a smaller part of the first internal contour (20) than the first circular segment (31);
- a cross section, which is constant in the region of the first circular segment (31), with a bevel (21) having a clear inside diameter that decreases from the side (19) opposite the pressing region (11) in the axial direction of the assembly group (28); and
- an element (26) which is arranged in the region of the second circular segment (27) and projects inwards beyond the constant cross section of the first circular segment (31),
**characterized in that**
- the element (26) arranged in the region of the second circular segment (27) has an insertion chamfer (32), and
- an inclination angle of the insertion chamfer (32) is greater than an inclination angle of the bevel (21), in each case with respect to the axis of symmetry (A_{S}) of the assembly group (28), and/or a surface of the insertion chamfer (32) is arranged so as to be offset inwards in a radial direction with respect to a corresponding surface of the bevel (21), such that when the assembly group (28) is attached to the fitting body (2), the element (26) causes an axis of symmetry (A_{S}) of the ferrule (4) to be tilted relative to a central axis (A_{F}) of the fitting body (2) .

2. Assembly group (28) according to Claim 1, wherein the stop ring (3) has, on a side facing the pressing region (11), a second internal contour (14) with first regions (15) that protrude and second regions (16) that are set back compared with the first regions (15), for securing the stop ring (3) to the ferrule (4).

3. Press fitting (1) having a fitting body (2) and an assembly group (28) secured to the fitting body (2), according to Claim 1 or 2.

4. Press fitting (1) according to Claim 3, wherein
- the fitting body (2) has an encircling groove (7); and
- the ferrule (4) has, at the first axial end (9), a first protrusion that faces inwards in a radial direction and engages in the groove (7) such that the ferrule (4) is secured directly to the fitting body (2) .

5. Press fitting (1) according to Claim 4, wherein the first protrusion that faces inwards in a radial direction is designed in the form of a lip (8).

6. Press fitting (1) according to Claim 4 or 5, wherein the fitting body (2) has an elevation that is located ahead of the groove (7) in the attachment direction and is designed such that when the assembly group (28) is attached to the fitting body (2), the element (26) butts against the elevation of the fitting body (2) and thus results in the axis of symmetry (A_{S}) of the ferrule (4) being tilted relative to the central axis (A_{F}) of the fitting body (2) .

7. Press fitting (1) according to Claim 6, wherein the elevation located ahead of the groove (7) in the attachment direction is designed in the form of a rib (29) .

8. Press fitting (1) according to any of Claims 4 to 7, wherein the stop ring (3) has a second protrusion that faces inwards in a radial direction and engages in the groove (7) in the fitting body (2).

9. Press fitting (1) according to Claim 8, wherein the second protrusion that faces inwards in a radial direction is designed in the form of an open bottom area (23).

10. Assembly method (28) for a press fitting (1) according to any of Claims 3 to 9, having the steps of:
- fastening the stop ring (3) to a first axial end (9) of the ferrule (4);
- tilting the axis of symmetry (A_{S}) of the ferrule (4) relative to a central axis (A_{F}) of the fitting body (2) by means of the element (26) arranged in the region of the second circular segment (27) of the stop ring (3) ;
- in the tilted state, attaching the ferrule (4), with the stop ring (3) fastened thereto, onto the fitting body (2), with the first axial end (9) first; and
- latching the ferrule (4) and/or the stop ring (3) together with a groove (7) in the fitting body (2), wherein the axis of symmetry (A_{S}) of the ferrule (4) substantially matches the central axis (A_{F}) of the fitting body (2) after latching.

11. Assembly method (28) according to Claim 10, wherein the element (26) arranged in the region of the second circular segment (27) butts, in the step of attaching the ferrule (4), against an elevation, located ahead of the groove (7) in the attachment direction, of the fitting body (2), and results in the axis of symmetry (A_{S}) of the ferrule (4) being tilted relative to the central axis (A_{F}) of the fitting body (2) .

12. Assembly method (28) according to Claim 10 or 11, also comprising:
- centring the assembly group, comprising the stop ring (3) and the ferrule (4), during the assembly thereof on the fitting body (2) by way of the bevel (21) of the first internal contour (20) of the stop ring (3).

## Revendications

1. Groupe de montage (28) pour un raccord à sertir (1), présentant :
- un manchon à sertir (4) essentiellement cylindrique avec une zone de sertissage (11) ; et
- une bague de butée (3) fixée à une première extrémité axiale (9) du manchon à sertir (4), qui délimite la zone de sertissage (11) dans une direction axiale du manchon à sertir (4), la bague de butée (3) présentant :
- un premier contour intérieur (20) sur un côté (19) opposé à la zone de sertissage (11) pour appliquer le groupe de montage (28) sur un corps de raccord (2) du raccord à sertir (1) ;
- un premier segment de cercle (31) et un deuxième segment de cercle (27) voisin de celui-ci, qui s'étend sur une partie plus petite du premier contour intérieur (20) que le premier segment de cercle (31) ;
- une section transversale constante dans la zone du premier segment de cercle (31) avec un chanfrein (21) dont le diamètre intérieur libre diminue dans la direction axiale du groupe de montage (28) en partant du côté (19) opposé à la zone de sertissage (11) ; et
- un élément (26) agencé dans la zone du deuxième segment de cercle (27), qui dépasse vers l'intérieur de la section transversale constante du premier segment de cercle (31),
**caractérisé en ce que**
- l'élément (26) agencé dans la zone du deuxième segment de cercle (27) présente un biseau d'insertion (32), et
- un angle d'inclinaison du biseau d'insertion (32) est supérieur à un angle d'inclinaison du chanfrein (21), respectivement par rapport à l'axe de symétrie (A_{S}) du groupe de montage (28), et/ou une surface du biseau d'insertion (32) est agencée en décalage en direction radiale vers l'intérieur par rapport à une surface correspondante du chanfrein (21), de telle sorte que, lors de l'application du groupe de montage (28) sur le corps de raccord (2), l'élément (26) provoque un basculement relatif d'un axe de symétrie (A_{S}) du manchon à sertir (4) par rapport à un axe central (A_{F}) du corps de raccord (2).

2. Groupe de montage (28) selon la revendication 1, dans lequel la bague de butée (3) présente, sur un côté tourné vers la zone de sertissage (11), un deuxième contour intérieur (14) avec des premières zones (15) en saillie et des deuxièmes zones (16) en retrait par rapport aux premières zones (15) pour fixer la bague de butée (3) sur le manchon à sertir (4).

3. Raccord à sertir (1), présentant un corps de raccord (2) ainsi qu'un groupe de montage (28) selon l'une quelconque des revendications 1 ou 2 fixé sur le corps de raccord (2).

4. Raccord à sertir (1) selon la revendication 3, dans lequel
- le corps de raccord (2) présente une rainure circonférentielle (7) ; et
- le manchon à sertir (4) présente, à la première extrémité axiale (9), une première saillie dirigée vers l'intérieur en direction radiale, qui s'engage dans la rainure (7), de telle sorte que le manchon à sertir (4) est directement fixé au corps de raccord (2).

5. Raccord à sertir (1) selon la revendication 4, dans lequel la première saillie dirigée vers l'intérieur en direction radiale est conçue sous la forme d'une lèvre (8) .

6. Raccord à sertir (1) selon la revendication 4 ou 5, dans lequel le corps de raccord (2) présente un bossage situé avant la rainure (7) dans la direction d'application, qui est conçu de telle sorte que l'élément (26), lors de l'application du groupe de montage (28) sur le corps de raccord (2), vient buter contre le bossage du corps de raccord (2) et provoque ainsi le basculement relatif de l'axe de symétrie (A_{S}) du manchon à sertir (4) par rapport à l'axe central (A_{F}) du corps de raccord (2).

7. Raccord à sertir (1) selon la revendication 6, dans lequel le bossage situé avant la rainure (7) dans la direction d'application est conçu sous la forme d'une nervure (29).

8. Raccord à sertir (1) selon l'une quelconque des revendications 4 à 7, dans lequel la bague de butée (3) présente une deuxième saillie dirigée vers l'intérieur en direction radiale, qui s'engage dans la rainure (7) du corps du raccord (2).

9. Raccord à sertir (1) selon la revendication 8, dans lequel la deuxième saillie dirigée vers l'intérieur en direction radiale est conçue sous la forme d'une surface de fond ouverte (23).

10. Procédé de montage (28) pour un raccord à sertir (1) selon l'une quelconque des revendications 3 à 9, avec les étapes suivantes :
- la fixation de la bague de butée (3) à une première extrémité axiale (9) du manchon à sertir (4) ;
- le basculement relatif (3) de l'axe de symétrie (A_{S}) du manchon à sertir (4) par rapport à un axe central (A_{F}) du corps de raccord (2) au moyen de l'élément (26) agencé dans la zone du deuxième segment de cercle (27) de la bague de butée (3) ;
- à l'état basculé, l'application du manchon à sertir (4) avec la bague de butée (3) qui y est fixée, avec la première extrémité axiale (9) en avant, sur le corps de raccord (2) ; et
- l'encliquetage du manchon à sertir (4) et/ou de la bague de butée (3) avec une rainure (7) du corps de raccord (2), l'axe de symétrie (A_{S}) du manchon à sertir (4) coïncidant essentiellement avec l'axe central (A_{F}) du corps de raccord (2) après l'encliquetage.

11. Procédé de montage (28) selon la revendication 10, dans lequel l'élément (26) agencé dans la zone du deuxième segment de cercle (27) vient buter, lors de l'étape d'application du manchon à sertir (4), contre un bossage du corps de raccord (2) situé avant la rainure (7) dans la direction d'application et entraîne le basculement relatif de l'axe de symétrie (A_{S}) du manchon à sertir (4) par rapport à l'axe central (A_{F}) du corps de raccord (2).

12. Procédé de montage (28) selon la revendication 10 ou 11, comprenant en outre :
- le centrage du groupe de montage, comprenant la bague de butée (3) et le manchon à sertir (4), lors de leur montage sur le corps de raccord (2), par le chanfrein (21) du premier contour intérieur (20) de la bague de butée (3).
